# EUROPEAN PATENT SPECIFICATION

(11) **EP 3 295 840 B1**
(45) Date of publication and mention of the grant of the patent: **18.09.2019**
(21) Application number: 17191002.9
(22) Date of filing: 14.09.2017
(51) Int. Cl.: A47J 31/46

(54) **COMPONENT FOR A COFFEE MACHINE**
KOMPONENTE FÜR EINE KAFFEEMASCHINE
COMPOSANT POUR UNE MACHINE À CAFÉ

(30) Priority: 16.09.2016 IT 201600093543
(43) Date of publication of application: 21.03.2018
(73) Proprietor: Rocket Milano S.r.L., 20060 Liscate (IT)
(72) Inventor: MEO, David, NZ - 6022 WELLINGTON (NZ)
(74) Representative: Lunati & Mazzoni S.r.L.

(56) References cited:
- EP-A1- 2 756 784
- EP-A2- 2 336 666
- DE-A1-102010 013 066
- GB-A- 969 173

## Description

The present invention relates to a coffee machine component of the type specified in the preamble of the first claim.

In particular, the invention relates to a component comprised within a lever dispensing group, for example of the E61 type.

Coffee machines present on the market, whether domestic or professional, are known in the state of the art. They are for example shown in patent applications EP-A-2756784, GB-A-969173 and EP-A-2336666.

They summarily consist of a heat source, a boiler, a pressurisation system, and a dispensing group.

In addition, some models may include a grinder for coffee beans, and hence an internal or external container for collecting the same.

The heat source may be, for example, of the electric or gas type and is substantially adapted to heat the water inside the boiler.

The boiler may have different dimensions depending on the type and size of the machine in which it is embedded. It can be made of different metal materials, but pure copper appears to be the best metal due to its conductivity, and therefore thermal inertia, characteristics. It is also usually monitored via pressure switches or temperature probes, as the temperature must be as far as possible maintained constant within the hydraulic circuit of the machine.

The pressurisation system consists of an internal positive displacement pump or a vibration pump or even a manual lever, and is adapted to raise the water pressure to 9 bars.

Lastly, the dispensing group is a component in which the coffee pre-infusion and/or infusion step takes place. It is generally made of solid brass or stainless steel and obtained by hot-pressing, the preferred working technique since it prevents internal voids from forming and provides the machine with high inertia, as the structure of the group is compact.

This dispensing group is, in particular, generally of the E61 type, a unique designation known to the person skilled in the art.

The E61 dispensing group was introduced by Faema® in the year 1961 and is a thermally stable group whose stability is maintained by means of an integrated thermosyphon circuit.

In particular, summarily, the group consists of a diffuser for introducing pressurised water to the dispensing filter, a pre-infusion device, and a containment chamber. The latter communicates with the inside of the coffee machine and in particular communicates with the boiler containing high temperature water.

By means of piping, the water thermosyphon circuit between the containment chamber and the boiler is never interrupted and is continuous even during coffee dispensing.

Generally, the chamber houses a component substantially in the shape of a mushroom whose head, known as the injector, protrudes from above the dispensing group, as conceived by the E61 model.

Therefore, the stem of this component remains constantly in contact with the flow of water coming from the boiler and generally consists of a metallic material, and in particular of nickel-plated brass, widely used for the manufacture of coffee machine components.

The described prior art has a few major drawbacks.

In particular, the material constituting said stem is subject to wear due to the continuous contact of the water with the metal casing.

In particular, in the case of nickel-plated brass components, although nickel increases the corrosion resistance of brass in water, it tends to form limescale, which results in triggering corrosive reactions on the surface of the metallic stem.

In the light of the above-mentioned considerations, another major drawback is that the water in the thermosyphon circuit is polluted by the metal residues removed by corrosion from the aforesaid metal stem, with consequent problems from the hygiene-health point of view.

This tendency is further exacerbated in the case of materials, such as for example OT58, comprising lead moieties that are extremely toxic for the human body.

A further disadvantage within the scope of the prior art is that the prolonged contact with water and the consequent corrosive wear of the components inside the chamber of the dispensing group result in a shortening of the duration and effectiveness thereof.

In fact, corrosion cracks, combined with the dispensing pressures, can induce premature fatigue failure, for example, of the mushroom-shaped stem.

In this context, the technical task underlying the present invention is to devise a coffee machine component, which is capable of substantially obviating the above-mentioned drawbacks.

Within the scope of said technical task, a major object of the invention is to obtain a coffee machine component, which is substantially corrosion-resistant.

Another major object of the invention is to provide a component, which does not release polluting substances harmful to the human body into the water from the boiler.

In conclusion, another technical task underlying the invention is to provide coffee machine components, and in particular on the inside of the E61-type dispensing group, which are durable and suffer only slightly from damage due to fatigue wear. The technical task and the specified objects are achieved by means of the coffee machine component as claimed in the appended claim 1. Preferred embodiments are described in the dependent claims.

The features and advantages of the invention will be apparent from the detailed description of preferred embodiments of the invention, with reference to the accompanying drawings, in which:

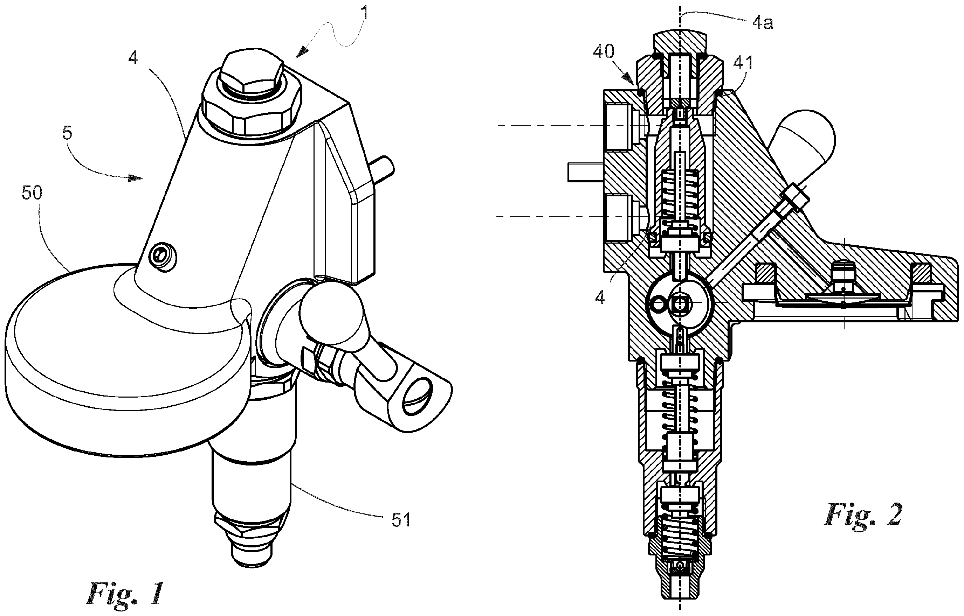

**Fig. 1** shows a dispensing group in perspective;
**Fig. 2** is a sectional side view of a dispensing group;

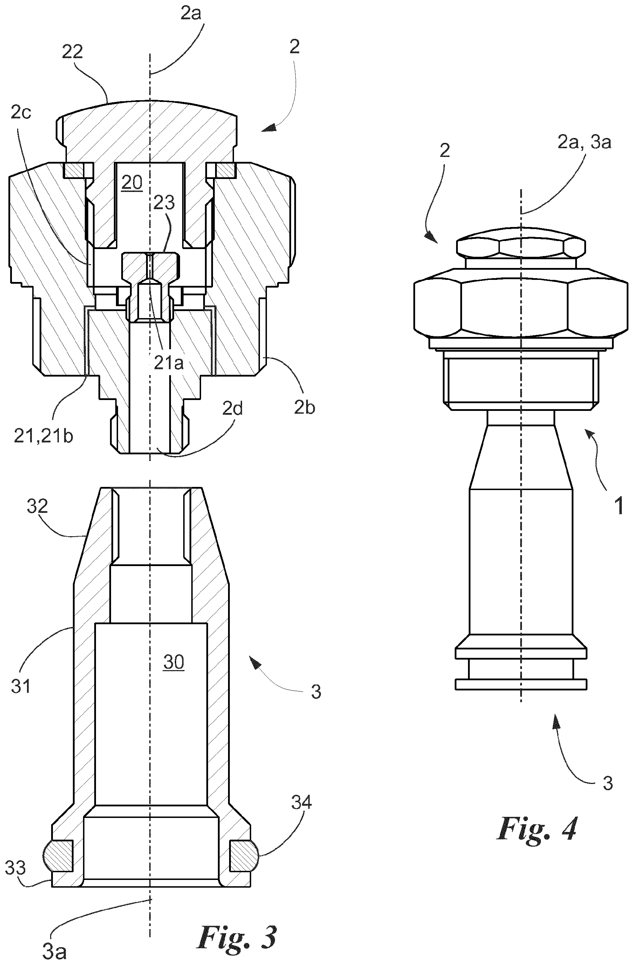

**Fig. 3** is a side view of the component according to the invention; and
**Fig. 4** is a sectional side view of the stem and the head of the component according to the invention.

In the present document, the measures, values, shapes and geometric references (such as perpendicularity and parallelism), when associated with terms like "about" or other similar terms such as "almost" or "substantially", are to be understood as unless measurement errors or inaccuracies due to production and/or manufacturing defects and, especially, unless a slight difference from the value, the measure, the shape, or the geometric reference with which it is associated. For example, these terms, if associated with a value, preferably indicate a difference not exceeding 10% of the value itself.

Furthermore, when used, terms such as "first", "second", "higher", "lower", "main" and "secondary" do not necessarily identify an order, a priority relationship or a relative position, but can simply be used to distinguish more clearly the different components from each other.

With reference to the Figures, the coffee machine component according to the invention is indicated as a whole by the numeral **1.**

The coffee machine component 1 is preferably comprised within a coffee machine. The coffee machine can be a machine for domestic use or for professional use and therefore can have overall different sizes or structures.

Preferably, the coffee machine comprises a dispensing group **5.**

The dispensing group 5 is, for example, a preferably metallic group adapted to draw a fluid substance, preferably water, from a reservoir or boiler in order to mix it with ground coffee.

Therefore, the above group 5 is substantially adapted to dispense coffee. Preferably, the dispensing group 5 is a dispensing group of the E61 type.

The group 5 preferably comprises, on the inside, a plurality of devices including, for example, a dispenser cap **50,** a drainage device **51** and a chamber **4.**

The dispenser cap 50 is, for example, a discoid element comprising a diffuser from which heated water is released to produce the beverage, typically coffee, at the desired temperature and pressure.

Instead, the drainage device is a preferably tubular device designed to drain part of the fluid remaining inside the dispensing group 50 once the dispensing is complete. The chamber 4 defines a longitudinal axis **4a** and is, for example, of various sizes depending on the dispensing group 5 in which it is placed. It can therefore have a cubic, cylindrical or other shape and is preferably in the shape of a truncated semi-cone whose height is substantially aligned along the longitudinal axis 4a.

The chamber 4 is preferably in controlled fluidic connection with the dispenser cap 50 and the drainage device 51.

In other words, the chamber 4 is, for example, connected to the cap 50 and the device 51 by means of connections that can be opened or closed by means of control systems.

Furthermore, the chamber 4 preferably comprises a hole **40,** for example arranged at the top.

Such a hole can have various shapes and sizes, however, preferably, it has a circular shape.

For example, the hole may have a diameter of between 1 and 5 cm. Preferably, the hole is a circle having a diameter of approximately 3 cm and centred on the longitudinal axis 4a.

In addition, the hole 40 comprises first fastening means **41** adapted to enable the engagement of an object inside the hole 40.

The first fastening means 41 can therefore consist of a threaded guide.

The coffee machine component 1 is at least partially embeddable inside the chamber 4.

Therefore, the component 1 is, for example, suitable to be inserted in the hole 40 so that at least a portion thereof is comprised inside the volume defined by the chamber 4. Also preferably, the component 1 is adapted to hermetically seal said chamber 4. The component 1 comprises a head **2** and a stem **3.**

The head 2 is a preferably metallic element defining a main axis **2a** and suitable to be bound to the hole 40 so as to allow the chamber 4 to be hermetically sealed.

Therefore, the head 2, for example, has a substantially cylindrical shape, which is compatible, at least in part, with the size of the hole 40 and can be centred along the longitudinal axis 4a. In addition, the head 2 has, on at least part of its outer lateral surface, second fastening means **2b.**

These second fastening means 2b are adapted to be coupled with said first fastening means 41 and therefore, for example, are threads when the main axis 2a and the longitudinal axis 4a are aligned in the closed configuration.

The head 2, as said, is preferably made of a metallic material. Most suitably, the head 2 is made of stainless steel of the AISI 303 type.

The head further preferably comprises at least a first cavity **20** and at least one injector **21.**

The cavity 20 corresponds, for example, to a volume obtained within the head 2 of any size and shape.

Instead, the injector 21 is preferably a very small hole, for example having a circular shape and a diameter comprised between 1 mm and 2 mm, and more suitably of 1.5 mm.

This hole is substantially designed to allow the passage of a pressurised fluid and is therefore, for example, comparable to a sprayer in fluidic connection between two volumes.

The head 2 can then be in one piece or it can include, on the inside, mountable or demountable components.

For example, the head 2 comprises an outer hole **2c** and an inner hole **2d.**

The outer hole 2c can be centred with respect to the main axis 2a and, for example, adapted to house an object, such as for instance a screw plug **22.**

This screw plug 22 is preferably adapted to close the outer hole 2c and to be constrained in the area thereof so as to ensure a hermetic sealing of the head 2. The inner hole 2d is preferably centred with respect to the main axis 2a and, instead, adapted to house a fitting **23.**

This fitting 23 may be, for example, a perforated screw which can be constrained to the inner hole 2d and comprises, for example, a central injector **21a** running through it.

In the case that the head 2 is in one piece, the central injector 21a is preferably located on the lower surface of said head 2 and substantially centred with respect to the main axis 2a when the component 1 is in the closed configuration, i.e. located in the hole 40 of the chamber 4, with the main axis 2a and the longitudinal axis 4a aligned.

Furthermore, the head 2 preferably comprises at least one lateral injector **21b.** The lateral injector is arranged, for example, on the lower surface of the head 2 and, therefore, is intended to be contained inside the volume defined by the chamber 4 and the head 2 in the closed configuration.

Preferably, the head 2 comprises a plurality of lateral injectors 21b.

Most suitably, the head 2 comprises four lateral injectors 21b, which are symmetrical in pairs with respect to the main axis 4a on which the head 2 can be centred. Thus, at least one lateral injector 21b is preferably a fluidic through connection between the first cavity 20 and the chamber 4.

The stem 3 is a hollow element defining a secondary axis **3a,** which can also be centred along the longitudinal axis 4a. Preferably, the stem 3 has a substantially tubular shape centred along the secondary axis 3a and comprising a second cavity **30.**

Therefore, the stem 3, for example, is a hollow cylindrical element comprising a central body **31,** a fastening end **32** and a free end **33.**

The central body 31 is preferably a cylinder, centred with respect to the secondary axis 3a, having a diameter comprised between 15 and 25 mm, and more suitably of 2 cm.

The fastening end 32 is, for example, a substantially conical duct centred with respect to the secondary axis 3a and convergent, i.e. defining a narrowing of the section of the central body 31.

The free end 33 is, for example, a substantially conical duct centred with respect to the secondary axis 3a and divergent, i.e. defining an enlargement of the section of the central body 31.

Also preferably, the free end 33 comprises a gasket **34.**

The gasket 34 is, for example, an elastomeric ring, centred with respect to the secondary axis 3a, arranged on the outer surface of the free end.

The stem 3 can be made of various materials, such as metals, can be of the same material as the head 2, and therefore can be in one piece with the head 2. Preferably, however, the stem 3 is made of a ceramic material.

Most suitably, the stem 3 is made of alumina. Among the various types of alumina, the stem 3 is, for example, 96% of the AL203 type.

Therefore, for example, the stem 3 is manufactured by pressure injection moulding, similar to moulding of thermoplastic materials: preferably, the alumina powder is mixed with waxes to make it liquid and injectable; once the compound has been injected into the mould, the workpiece is ejected and moved on to a process known as debonding at 450°C in which the waxes are discharged; the workpiece is then sintered at 1650°C to stabilize the material and is subsequently tumbled and burred to remove the mould junction marks and any burrs.

The head 2 and the stem 3 are thus preferably integrally bound to each other. Therefore, the head 2 and the stem 3, for example, are integrally bound in a non-releasable manner.

For example, the bond can be recreated by means of various machining processes, which allow the two parts to be joined. The head 2 and the stem 3 are preferably made of different materials.

Preferably, the head 2 and the stem 3 are integrally bound by means of a natural adhesive.

In particular, the lower surface of the head 2 is preferably bound to the stem 3 at the constraint portion 32 so that the main axis 2a and the secondary axis 3a are aligned. Therefore, for example, the central injector 21a is comprised within the constraint portion.

Thus, preferably, the central injector 21a is a fluidic through connection between the first cavity 20 and the second cavity 30.

In the closed configuration, the stem 3 is preferably housed within the chamber 4. In particular, the head 2 and the stem 3 define a mushroom-shaped element. Accordingly, the component 1 substantially consists of a mushroom designed to be housed in a dispensing group 5.

Therefore, since the chamber 4 is constantly filled with fluid, the stem 3 is adapted to be placed in constant contact with the fluid within the thermosyphon circuit defined between the dispensing group 5 and the boiler.

The coffee machine component 1 according to the invention achieves important advantages.

In fact, the coffee machine component 1 is much more corrosion-resistant than is known in the scope of the prior art.

As is known, ceramic materials are extremely performing as regards resistance, and in particular they advantageously exhibit their characteristics in oxidizing-corrosive environments and in high temperature environments.

The thermosyphon circuit within coffee machines consists of water at high temperatures and pressures, and hence the component 1 is more durable and suffers only slightly from damage due to fatigue wear.

This also leads to a reduction in the expenses due to replacement of the coffee machine part, as well as in the machine downtime in case of damage.

In conclusion, the use of the ceramic material and the food grade adhesives allows, in any case, for preventing polluting substances harmful to the human body, such as for example nickel or lead present inside the commonly used metals, from being released into the water from the boiler.

The invention is subject to variations falling within the scope of the inventive concept as defined by the claims. For example, the stem 3 can be made by giving it different shapes and sizes, or else the number of injectors arranged on the lower surface of the head 2 may vary.

## Claims

1. Component for a coffee machine (1) at least partially embeddable inside a chamber (4) of a dispensing group (5) and adapted to hermetically seal said chamber (4) and comprising:
- a head (2), and
- a stem (3);
- said head comprising at least a first cavity (20) and at least one injector (21),
- said stem (3) comprising a second cavity (30)
and **characterised in that**
- said stem (3) is made of a ceramic material.

2. Component (1) according to claim 1, wherein said head (2) and said stem (3) are integrally bound to each other.

3. Component (1) according to at least one preceding claim, wherein said head (2) and said stem (3) are integrally bound in a non-releasable manner.

4. Component (1) according to at least one preceding claim, wherein said stem (3) and said head (2) are integrally bound in a non-releasable manner by means of a food grade adhesive.

5. Component (1) according to at least one preceding claim, wherein said stem (3) is made of alumina.

6. Component (1) according to at least one preceding claim, wherein said head (2) is made of a metallic material.

7. Component (1) according to at least one preceding claim, substantially in the shape of a mushroom suitable to be housed in said dispensing group (5), said dispensing group being of the E61 type.

8. Component (1) according to at least one preceding claim, wherein said stem (3) comprises a gasket (34).

9. Component (1) according to at least one preceding claim, wherein said head (2) comprises a central injector (21a), said central injector (21a) being a fluidic through connection between said first cavity (20) and said second cavity (30).

10. Component (1) according to at least one preceding claim, wherein said head (2) comprises at least one lateral injector (21b), said lateral injector (21b) being a fluidic through connection between said first cavity (20) and chamber (4).

## Patentansprüche

1. Komponente für eine Kaffeemaschine (1), mindestens partiell in das Innere einer Kammer (4) einer Ausgabegruppe (5) einschließbar und geeignet, die genannte Kammer (4) hermetisch abzudichten, die Folgendes umfasst:
- ein Kopfteil (2) und
- einen Fuß (3)
- wobei das genannte Kopfteil mindestens einen ersten Hohlraum (20) und mindestens eine Düse (21) umfasst,
- wobei der genannte Fuß (3) einen zweiten Hohlraum (30) umfasst
und **dadurch gekennzeichnet, dass**
- der genannte Fuß (3) aus Keramik besteht.

2. Komponente (1) nach Anspruch 1, bei der das genannte Kopfteil (2) und der genannte Fuß (3) fest miteinander verbunden sind.

3. Komponente (1) nach mindestens einem der vorangegangenen Ansprüche, bei der das genannte Kopfteil (2) und der genannte Fuß (3) unlösbar fest miteinander verbunden sind.

4. Komponente (1) nach mindestens einem der vorangegangenen Ansprüche, bei der der genannte Fuß (3) und das genannte Kopfteil (2) unlösbar durch einen Lebensmittelklebstoff fest miteinander verbunden sind.

5. Komponente (1) nach mindestens einem der vorangegangenen Ansprüche, bei dem der genannte Fuß (3) aus Aluminiumoxid besteht.

6. Komponente (1) nach mindestens einem der vorangegangenen Ansprüche, bei dem das genannte Kopfteil (2) aus Metall besteht.

7. Komponente (1) nach mindestens einem der vorangegangenen Ansprüche, die im Wesentlichen aus einem pilzförmigen Element besteht, das geeignet ist, in der genannten Ausgabegruppe (5) untergebracht zu werden, wobei die genannte Ausgabegruppe des Typs E61 ist.

8. Komponente (1) nach mindestens einem der vorangegangenen Ansprüche, bei dem der genannte Fuß (3) eine Dichtung (34) umfasst.

9. Komponente (1) nach mindestens einem der vorangegangenen Ansprüche, bei der das genannte Kopfteil (2) eine zentrale Düse (21a) umfasst, wobei die genannte zentrale Düse (21a) eine strömungstechnische Verbindung zwischen dem genannten ersten Hohlraum (20) und dem genannten zweiten Hohlraum (30) darstellt.

10. Komponente (1) nach mindestens einem der vorangegangenen Ansprüche, bei der das genannte Kopfteil (2) mindestens eine seitliche Düse (21b) umfasst, wobei die genannte seitliche Düse (21b) eine strömungstechnische Verbindung zwischen dem genannten ersten Hohlraum (20) und der Kammer (4) darstellt.

## Revendications

1. Composant pour une machine à café (1) pouvant au moins être partiellement inclus à l'intérieur d'une chambre (4) d'un groupe de distribution (5) et étant apte à fermer hermétiquement ladite chambre (4) et comprenant :
- une tête (2) et
- une tige (3)
- ladite tête comprenant au moins une première cavité (20) et au moins un gicleur (21),
- ladite tige (3) comprenant une deuxième cavité (30)
et **caractérisé en ce que**
- ladite tige (3) est en matériau céramique.

2. Composant (1) selon la revendication 1, dans lequel ladite tête (2) et ladite tige (3) sont fixées solidairement.

3. Composant (1) selon au moins une des revendications précédentes, dans lequel ladite tête (2) et ladite tige (3) sont fixées solidairement de façon non libérable.

4. Composant (1) selon au moins une des revendications précédentes, dans lequel ladite tige (3) et ladite tête (2) sont fixées solidairement de façon non libérable par un adhésif alimentaire.

5. Composant (1) selon au moins une des revendications précédentes, dans lequel ladite tige (3) est en Alumine.

6. Composant (1) selon au moins une des revendications précédentes, dans lequel ladite tête (2) est en matériau métallique.

7. Composant (1) selon au moins une des revendications précédentes, constitué essentiellement d'un champignon apte à être logé dans ledit groupe de distribution (5), ledit groupe de distribution étant de type E61.

8. Composant (1) selon au moins une des revendications précédentes, dans lequel ladite tige (3) comprend un joint (34).

9. Composant (1) selon au moins une des revendications précédentes, dans lequel ladite tête (2) comprend un gicleur central (21a), ledit gicleur central (21a) étant une connexion de passage fluidique entre ladite première cavité (20) et ladite deuxième cavité (30).

10. Composant (1) selon au moins une des revendications précédentes, dans lequel ladite tête (2) comprend au moins un gicleur latéral (21b), ledit gicleur latéral (21b) étant une connexion de passage fluidique entre ladite première cavité (20) et ladite chambre (4).
